(19)

Europäisches
Patentamt
European
Patent Office
Office européen
des brevets

(11) **EP 4 357 373 A1**

(12) **EUROPEAN PATENT APPLICATION**
published in accordance with Art. 153(4) EPC

(43) Date of publication:
**24.04.2024 Bulletin 2024/17**

(21) Application number: **21945736.3**

(22) Date of filing: **18.10.2021**

(51) International Patent Classification (IPC):
*C08F 6/22* (2006.01)        *C08F 14/00* (2006.01)
*C08F 14/08* (2006.01)       *C08F 14/18* (2006.01)
*C08F 214/22* (2006.01)      *C08F 214/26* (2006.01)
*C08F 214/18* (2006.01)      *C08F 214/28* (2006.01)
*C08J 3/03* (2006.01)

(52) Cooperative Patent Classification (CPC):
**C08C 1/14; C08F 6/22; C08F 14/00; C08F 14/08;
C08F 14/18; C08F 214/18; C08F 214/22;
C08F 214/26; C08F 214/28; C08J 3/03**

(86) International application number:
**PCT/CN2021/124486**

(87) International publication number:
**WO 2022/262156 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.06.2021 CN 202110666013**

(71) Applicants:
• **Zhejiang Jusheng Fluorochemical Co., Ltd.**
  **Quzhou, Zhejiang 234000 (CN)**
• **Fluoropolymer Plant of Zhejiang Juhua Co. Ltd**
  **Quzhou, Zhejiang 234000 (CN)**

(72) Inventors:
• **MENG, Qingwen**
  **Quzhou, Zhejiang 234000 (CN)**

• **YU, Kaoming**
  **Quzhou, Zhejiang 234000 (CN)**
• **CHENG, Yu**
  **Quzhou, Zhejiang 234000 (CN)**
• **HUANG, Jun**
  **Quzhou, Zhejiang 234000 (CN)**
• **LU, Di**
  **Quzhou, Zhejiang 234000 (CN)**
• **CHEN, Jia**
  **Quzhou, Zhejiang 234000 (CN)**
• **WANG, Xin**
  **Quzhou, Zhejiang 234000 (CN)**
• **HU, Shuaijie**
  **Quzhou, Zhejiang 234000 (CN)**

(74) Representative: **Zaboliene, Reda**
**Metida**
**Business center Vertas**
**Gyneju str. 16**
**01109 Vilnius (LT)**

(54) **METHOD FOR IMPROVING COAGULATING EFFECT OF FLUORORUBBER EMULSION**

(57)      Disclosed is a method of improving coagulation of fluororubber emulsion, characterized by adding a solubilizer to a system with the fluororubber emulsion as a stock, including: first adding high purity water to the emulsion, followed by adding a coagulant, and then adding the solubilizer for coagulation. The crumbs resulting from coagulation are loose with low electrical conductivity and moisture content, and are easily washed and dewatered with short drying time; the disclosure reduces product costs and enhances product quality and production efficiency.

**Description**

FIELD

Embodiments of the disclosure relate to synthetic rubber, and more particularly relate to a method of improving coagulation of fluororubber emulsion.

BACKGROUND

Compared with other types of rubber, fluororubber has excellent properties in all rounds including high-temperature resistance, chemical corrosion resistance, resistance to mineral oils, and weathering and aging resistance, and is thus an important material for sealing as well as chemical distribution in fields of vehicles, aviation and aerospace, chemical industry, and among others. A distinctive characteristic of fluororubber is high temperature resistance, such that it may work under a temperature ranging from -50°C to 300°C over a long term.

Emulsion-polymerized fluororubber is synthesized from an emulsion through a free radical-initiated copolymerization process involving three monomers including vinylidene fluoride, tetrafluoroethylene and hexafluoropropylene, or involving two monomers including vinylidene fluoride and hexafluoropropylene, or involving two monomers including vinylidene fluoride and chlorotrifluoroethylene. Before further treatment, the fluororubber emulsion needs to be coagulated first. The coagulation procedure is essentially a demulsification procedure. There are two basic processes for demulsification: a physical process such as freezing, and a chemical process such as salting out.

A traditional coagulating process for fluororubber emulsion involves removing unreacted stock monomers by nitrogen replacement after completion of emulsion polymerization, then transferring the polymerized emulsion to a coagulation kettle, followed by adding a coagulant into the coagulation kettle where the polymerized emulsion is coagulated, followed by washing, dewatering, and vacuum drying, and then a fluororubber product is obtained.

The patent CN101323657A discloses a method of preparing pentanenitrile rubber emulsion and a method of preparing pentanenitrile rubber, the method of preparing pentanenitrile rubber comprising a step of preparing pentanenitrile rubber emulsion and a step of coagulating the emulsion into a fluororubber mass; since the coagulant used in the invention is an inorganic acid salt, impurity ions of the inorganic salt easily reside in the fluororubber mass, which are hardly washed away and dried.

The patent CN102875711A discloses a coagulating and washing method for polyvinylidene fluoride emulsion, the method mainly comprising mechanically coagulating a polyvinylidene fluoride emulsion, followed by settling and washing; since the mechanically coagulated polyvinylidene emulsion is a pasty rubber crumb, its settling and separating would be time-consuming; in addition, the average particle diameters of the pasty rubber crumb range from $5\mu m$ to $10\mu m$; such small particle diameters are not suitable for conventional centrifugal dewatering, which would take a relatively long dewatering time, not favorable for industrial production.

Generally, conventional coagulating processes of fluororubber emulsion have the following drawbacks:
The coagulated rubber crumbs are dense and hard to wash and dry; the powder or pasty rubber crumbs are easily lost during washing; in addition, filtering and dewatering are time-consuming; therefore, the preparation costs are high.

The impurities residing in the rubber crumbs affect product appearance and performance, degrading product quality; and impurity ions such as $SO_4^{2-}$, $Cl^-$, $NO^{3-}$ seriously corrode the downstream treatment metal equipment.

SUMMARY

An objective of the disclosure is to provide a method of improving coagulation of fluororubber emulsion; the coagulated crumb particles have a loose density, a lower electrical conductivity, and a low moisture content, which are easily washed and dewatered; therefore, the present disclosure reduces the drying time, lowers the production cost, and improves product quality and production efficiency, whereby the problems of conventional technologies can be solved.

To solve the technical problems, the method of improving coagulation of fluororubber emulsion according to the disclosure offers a technical solution below:
Embodiments of the disclosure provide a method of improving coagulation of fluororubber emulsion, characterized by adding a solubilizer to a system with the fluororubber emulsion as a stock, comprising: first adding high purity water to the emulsion, followed by adding a coagulant, and then adding the solubilizer for coagulation.

Preferably, the solubilizer is selected from the group consisting of one or more of methyl cellulose, polyethylene glycol monomethyl ether, polyoxyethylene fatty acid ester, polysorbate, and PEG (polyethyleneglycol).

Preferably, the coagulant is selected from one of $CaCl_2$, $MgCl_2$, $K_2SO_4$, NaCl, KCl, and $NH_4Cl$.

Preferably, a mass ratio of the solubilizer and the stock is 0.08 - 0.5:100, the stock being measured by weight of dry rubber in the fluororubber emulsion.

Preferably, a mass ratio of the coagulant, the solubilizer and the stock is 0.3~1.0: 0.08~0.5: 100, the stock being measured by weight of dry rubber in the fluororubber emulsion.

Preferably, the method of improving coagulation of fluororubber emulsion comprises steps of:

①preparing a 15%~25% coagulant solution for later use by weighing out 0.3~1.0 parts by weight of coagulant accurately and dissolving it in high purity water;

②preparing a 10%~15% solubilization solution for later use by weighing out 0.08~0.5 parts by weight of solubilizer and dissolving it in high purity water;

③preparing the stock for later use by preheating fluororubber emulsion equivalent to 100 parts by weight of dry fluororubber till 20°C - 60°C and removing unpolymerized monomers;

④coagulating the emulsion by adding the stock prepared from step ③ into a coagulation kettle, followed by adding high purity water into the coagulation kettle to dilute the stock till a 10%~20% solid content and stirring at a rate less than 500 rpm, adding the coagulant solution comprising 0.3~1.0 parts by weight of coagulant prepared from step ① and stirring for 2 to 5 minutes at a rate greater than 1000 rpm; then adding the solubilizer solution comprising 0.08~0.5 parts by weight of solubilizer prepared from step ② into the coagulation kettle and continuously stirring for 3 to 8 minutes till the emulsion is coagulated with uniform crumb particles and clear serum; whereby fluororubber crumbs precipitated from demulsification are obtained after the stirring stops, followed by washing the precipitated fluororubber crumbs, filtering the washed fluororubber crumbs with a shaking sieve, and drying, finally obtaining a fluororubber product.

Preferably, the disclosure may recycle the removed unpolymerized monomers.

Compared with conventional technologies, the disclosure offers the following effects:

The solubilizer used by the disclosure has a good aqueous solubility and environment-friendliness. The solubilizer promotes solubility of inorganic salt micelles and plays a role of loosening, dispersing, and lubricating the crumbs during the coagulation process, which facilities formation of pore-channel gaps and reduces crumb density and caking. After the coagulation is complete, the crumbs exhibit a spongy form with an average particle diameter of 0.5 cm~2 cm, whereby they are easily washed and dried. The disclosure reduces waste water discharge and saves energy while reducing residual impurities inside the product, enhancing product quality, and mitigating corrosion of inorganic acid radical ions to downstream treatment metal equipment.

DETAILED DESCRIPTION

To make the objectives, technical solutions, and advantages of the disclosure more apparent, the disclosure will be further explained through examples. It should be appreciated that the specific examples described here are only for explaining, instead of limiting, the disclosure.

To ease understanding of the technical solutions above, the technical solutions of the disclosure will be described in detail through specific examples below.

**Example 1:**

A method of coagulating fluororubber emulsion comprises the following steps:

① preparing a 15% coagulant solution for later use by weighing out 30 g $MgCl_2$ coagulant accurately and dissolving it in high purity water;

② preparing a 10% solubilization solution for later use by weighing out 8 g PEG400 solubilizer and dissolving it in high purity water;

③ preparing a stock for later use by preheating 5 kg fluororubber emulsion with a 20% solid loading, equivalent to 1 kg dry rubber content, till 30°C;

④ coagulating the emulsion by adding the stock prepared from step ③ into a coagulation kettle, followed by stirring at 250 rpm, adding the coagulant solution prepared from step ① and stirring for 2 to 5 minutes at 1500 rpm; then adding the solubilizer solution prepared from step ② into the coagulation kettle and continuously stirring for 3 to 8 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 2**

A method of coagulating fluororubber emulsion comprises the following steps:

① preparing a 15% coagulant solution for later use by weighing out 100 g $K_2SO_4$ coagulant accurately and dissolving it in high purity water;

② preparing a 10% solubilization solution for later use by weighing out 20 g PEG300 solubilizer and dissolving it in high purity water;

③ preparing a stock for later use by preheating 5 kg fluororubber emulsion with a 20% solid loading, equivalent to 1kg dry rubber content, till 30°C;

④ coagulating the emulsion by adding the stock prepared from step ③ into a coagulation kettle, followed by stirring at 300 rpm, adding the coagulant solution prepared from step ① and stirring for 2 minutes at 1200 rpm; then adding the solubilizer solution prepared from step ② into the coagulation kettle and continuously stirring for 3 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 3**

A method of coagulating fluororubber emulsion comprises the following steps:

① preparing a 15% coagulant solution for later use by weighing out 30 g $MgCl_2$ coagulant accurately and dissolving it in high purity water;

② preparing a 10% solubilization solution for later use by weighing out 50 g PEG400 solubilizer and dissolving it in high purity water;

③ preparing a stock for later use by preheating 5 kg fluororubber emulsion with a 15% solid loading, equivalent to 1kg dry rubber content, till 30°C;

④ coagulating the emulsion by adding the stock prepared from step ③ into a coagulation kettle, followed by stirring at 400 rpm, adding the coagulant solution prepared from step ① and stirring for 3 minutes at 2000 rpm; then adding the solubilizer solution prepared from step ② into the coagulation kettle and continuously stirring for 4 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 4**

A method of coagulating fluororubber emulsion comprises the following steps:

① preparing a 15% coagulant solution for later use by weighing out 100 g $MgCl_2$ coagulant accurately and dissolving it in high purity water;

② preparing a 10% solubilization solution for later use by weighing out 5 g PEG600 solubilizer and dissolving it in high purity water;

③ preparing a stock for later use by preheating 5 kg fluororubber emulsion with a 15% solid loading, equivalent to 1 kg dry rubber content, till 30°C;

④ coagulating the emulsion by adding the stock prepared from step ③ into a coagulation kettle, followed by stirring at 500 rpm, adding the coagulant solution prepared from step ① and stirring for 4 minutes at 2000 rpm; then adding the solubilizer solution prepared from step ② into the coagulation kettle and continuously stirring for 5 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 5**

A method of coagulating fluororubber emulsion comprises the following steps:

① preparing a 15% coagulant solution for later use by weighing out 10 g $MgCl_2$ coagulant accurately and dissolving it in high purity water;

② preparing a 10% solubilization solution for later use by weighing out 5 g PEG400 solubilizer and dissolving it in high purity water;

③ preparing a stock for later use by preheating 5 kg fluororubber emulsion with a 10% solid loading, equivalent to 1kg dry rubber content, till 30°C;

④ coagulating the emulsion by adding the stock prepared from step ③ into a coagulation kettle, followed by stirring at 300 rpm, adding the coagulant solution prepared from step ① and stirring for 5 minutes at 1800 rpm; then adding the solubilizer solution prepared from step ② into the coagulation kettle and continuously stirring for 6 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 6**

A method of coagulating fluororubber emulsion comprises the following steps:

① preparing a 15% coagulant solution for later use by weighing out 300 g $MgCl_2$ coagulant accurately and dissolving it in high purity water;

② preparing a 10% solubilization solution for later use by weighing out 5 g polysorbate solubilizer and dissolving it in high purity water;

③ preparing a stock for later use by preheating 5 kg fluororubber emulsion with a 10% solid loading, equivalent to 1kg dry rubber content, till 30°C;

④ coagulating the emulsion by adding the stock prepared from step ③ into a coagulation kettle, followed by stirring at 400 rpm, adding the coagulant solution prepared from step ① and stirring for 2-5 minutes at 1800 rpm; then adding the solubilizer solution prepared from step ② into the coagulation kettle and continuously stirring for 3-8 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 7**

A method of coagulating fluororubber emulsion comprises the following steps:

① preparing a 15% coagulant solution for later use by weighing out 10 g $MgCl_2$ coagulant accurately and dissolving it in high purity water;

② preparing a 10% solubilization solution for later use by weighing out 100 g polysorbate solubilizer and dissolving it in high purity water;

③ preparing a stock for later use by preheating a 5 kg fluororubber emulsion with a 10% solid loading, equivalent to 1kg dry rubber content, till 30°C;

④ coagulating the emulsion by adding the stock prepared from step ③ into a coagulation kettle, followed by stirring at 500 rpm, adding the coagulant solution prepared from step ① and stirring for 2-5 minutes at 2000 rpm; then adding the solubilizer solution prepared from step ② into the coagulation kettle and continuously stirring for 3-8 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Example 8**

A method of coagulating fluororubber emulsion comprises the following steps:

① preparing a 15% coagulant solution for later use by weighing out 150 g $MgCl_2$ coagulant accurately and dissolving it in high purity water;

② preparing a 10% solubilization solution for later use by weighing out 100 g polysorbate solubilizer and dissolving it in high purity water;

③ preparing a stock for later use by preheating a 5 kg fluororubber emulsion with a 10% solid loading, equivalent to 1kg dry rubber content, till 30°C;

④ coagulating the emulsion by adding the stock prepared from step ③ into a coagulation kettle, followed by stirring at 300 rpm, adding the coagulant solution prepared from step ① and stirring for 2-5 minutes at 1800 rpm; then adding the solubilizer solution prepared from step ② into the coagulation kettle and continuously stirring for 3-8 minutes till the emulsion is coagulated with uniform crumb particles and clear serum; whereby fluororubber crumbs precipitated from demulsification are obtained after the stirring stops, followed by washing the precipitated fluororubber crumbs for 10 times, filtering the washed fluororubber crumbs with a shaking sieve, and vacuum drying for 3 hours, finally obtaining a fluororubber product.

**Comparative Example 1**

With the other conditions identical to Example 1, no solubilizer is added in the coagulation process in this Comparative Example 1.

**Comparative Example 2**

With the other conditions identical to Example 4, no solubilizer is added in the coagulation process in this Comparative Example 2.

**Experiment Example**

The products resulting from Examples 1 to 8 and the products resulting from Comparative Examples 1-2 were subjected to testing below, the results of which are set out in Table 1.

**Rinse Water Conductivity Testing of the Fluororubber Products**

1. after the fluororubber products were washed in respective rinse tanks for certain times, a beaker of water was caught from the discharge port of the respective rinse tank and sent for assaying (the rinse water was caught at an appropriate level, without a need to be weighed);

2. since the test samples had a relatively low electrical conductivity, an FE30 conductivity meter was selected, which had an electrode embedded with a temperature probe (e.g., an LE701 conductivity meter);

3. the conductivity meter was power on;

4. after the self-test of the meter was complete, the electrode was sufficiently immersed into the to-be-tested samples, and then the read button was pressed to start measurement; during the measurement process, the decimal point was flickering and the display presented the conductivity reads of respective samples, with an icon A displayed on the screen. After the reads became stable, the measurement stopped, the decimal point stopped flickering, and the icon $\sqrt{A}$ was displayed on the screen;

5. The test ended;

**Moisture Content Testing of Crude Fluororubber**

1. an aluminum box was placed in a baking oven and dried for 15 minutes;

2. the dried aluminum box was taken out and placed in a dryer for being cooled for 30 minutes;

3. the mass of the empty aluminum box was weighed, denoted as m0;

4.5 g crude fluororubber cut into particles was weighed out, denoted as m1;

5. the weighed crude fluororubber was placed into the aluminum box and baked in the baking oven at 105°C for 1.5 hours;

6. the baked aluminum box was taken out for being cooled for 30 minutes, followed by weighing the total mass of the crude fluororubber and the aluminum box, denoted as m2;

7. the moisture content X was calculated according to the equation below:

$$X = \frac{m1 - (m2 - m0)}{m1} \times 100\%$$

**Particle diameter Testing of Fluororubber**

1. the washed fluororubber was discharged into a shaking sieve for filtering to remove adsorbed moisture and for sizing testing, where four layers of sieve plates with mesh apertures of 2.0 cm, 1.5 cm, 1.0 cm, and 0.5 cm were arranged sequentially from top to down, respectively, and the sieved fluororubber was delivered via belts into corresponding trays to collect;

2. the collected products corresponding to different mesh apertures were weighed, and their weight percentages over the total weight of the products were recorded, and then respective average particle diameters of the fluororubber were calculated.

Table 1 Experiment Data of the Examples and Comparative Examples

| Ingredients & Parameters | Fluororubber Emulsion | High Purity Water | Coag ulant | Solub ilizer | Eff ect | Moisture Content | Particle diameter | Electrical Conductivity |
|---|---|---|---|---|---|---|---|---|
| Example 1 | 100 | balance | 0.3 | 0.08 | A+ | 0.118 | 0.8 cm | 1.3 |

(continued)

| Ingredients & Parameters | Fluororubber Emulsion | High Purity Water | Coagulant | Solubilizer | Effect | Moisture Content | Particle diameter | Electrical Conductivity |
|---|---|---|---|---|---|---|---|---|
| Example 2 | 100 | balance | 1 | 0.2 | A+ | 0.100 | 1.9 cm | 1.4 |
| Example 3 | 100 | balance | 0.3 | 0.5 | A | 0.075 | 1.6 cm | 1.6 |
| Example 4 | 100 | balance | 1 | 0.5 | A | 0.078 | 1.2 cm | 2.4 |
| Example 5 | 100 | balance | 0.1 | 0.05 | B | 0.109 | 0.3 cm | 2.6 |
| Example 6 | 100 | balance | 3 | 0.05 | B | 0.142 | 0.4 cm | 2.8 |
| Example 7 | 100 | balance | 0.1 | 1 | B | 0.112 | 0.2 cm | 2.5 |
| Example 8 | 100 | balance | 1.5 | 1 | B | 0.117 | 0.4 cm | 2.6 |
| Comparative Example 1 | 100 | balance | 0.3 | None | C | 0.229 | 0.1 cm | 16 |
| Comparative Example 2 | 100 | balance | 1 | None | C | 0.311 | 0.3 cm | 20 |

Comparative analysis between Examples 1 to 6 and Comparative Examples 1 to 2 reveals that with the same coagulation process applied, the average particle diameter with solubilizer used is greater than that without use of solubilizer; given the same drying time and washing times, the moisture content of fluororubber crumbs and the electrical conductivity of rinse water with use of the solubilizer used are both lower than those without use of solubilizer. The present method may reduce water consumption and drying time, with lower level of impurities in the resulting product. Meanwhile, a better effect may be achieved with the solubilizer of a specific content. The coagulant and solubilizer within a specific percentage range achieve an optimum synergy effect.

What have been described are only preferred embodiments of the disclosure, which are not intended for limiting the disclosure. Although the disclosure has been described in detail with reference to the examples above, those skilled in the art may modify the technical solutions set out in various examples above or equivalently replace part of the technical features therein. Any alterations, equivalent substitutes, and modifications made within the spirits and principle of the disclosure shall be encompasses in the protection scope of the disclosure.

**Claims**

1. A method of improving coagulation of fluororubber emulsion, **characterized by** adding a solubilizer to a system with the fluororubber emulsion as a stock, comprising: first adding high purity water to the emulsion, followed by adding a coagulant, and then adding the solubilizer for coagulation.

2. The method of improving coagulation of fluororubber emulsion according to claim 1, **characterized in that** the solubilizer is selected from the group consisting of one or more of methyl cellulose, polyethylene glycol monomethyl ether, polyoxyethylene fatty acid ester, polysorbate, and PEG (polyethyleneglycol).

3. The method of improving coagulation of fluororubber emulsion according to claim 1, **characterized in that** the coagulant is selected from one of $CaCl_2$, $MgCl_2$, $K_2SO_4$, NaCl, KCl, and $NH_4Cl$.

4. The method of improving coagulation of fluororubber emulsion according to any one of claims 1 to 3, wherein a mass ratio of the solubilizer and the stock is 0.08 - 0.5:100, the stock being measured by weight of dry rubber in the fluororubber emulsion.

5. The method of improving coagulation of fluororubber emulsion according to any one of claims 1 to 4, wherein a mass ratio of the coagulant, the solubilizer and the stock is 0.3~1.0: 0.08~0.5: 100, the stock being measured by weight of dry rubber in the fluororubber emulsion.

6. The method of improving coagulation of fluororubber emulsion according to claim 5, comprising:

① preparing a 15%~25% coagulant solution for later use by weighing out 0.3~1.0 parts by weight of coagulant accurately and dissolving it in high purity water;

② preparing a 10%~15% solubilization solution for later use by weighing out 0.08~0.5 parts by weight of solubilizer and dissolving it in high purity water;

③ preparing the stock for later use by preheating fluororubber emulsion equivalent to 100 parts by weight of dry fluororubber till 20°C - 60°C and removing unpolymerized monomers;

④ coagulating the emulsion by adding the stock prepared from step ③ into a coagulation kettle, followed by adding high purity water into the coagulation kettle to dilute the stock till a 10%~20% solid content and stirring at a rate less than 500 rpm, adding the coagulant solution comprising 0.3~1.0 parts by weight of coagulant prepared from step ① and stirring for 2 to 5 minutes at a rate greater than 1000 rpm; then adding the solubilizer solution comprising 0.08~0.5 parts by weight of solubilizer prepared from step ② into the coagulation kettle and continuously stirring for 3 to 8 minutes till the emulsion is coagulated with uniform crumb particles and clear serum, whereby fluororubber crumbs precipitated from demulsification are obtained after the stirring stops, followed by washing the precipitated rubber crumbs, filtering the washed fluororubber crumbs with a shaking sieve, and drying, finally obtaining a fluororubber product.

7.  A fluororubber prepared by the method of improving coagulation of fluororubber emulsion according to any one of claims 1 to 6.

8.  The fluororubber according to claim 7, wherein particles of the fluororubber crumbs have a diameter from 0.5 cm to 2 cm.

9.  The fluororubber according to claim 7, wherein the fluororubber has an electrical conductivity from 1 $\mu$s/cm to 5 $\mu$s/cm.

10. Application of the fluororubber of any of the preceding claims as materials for sealing and chemical distribution.

## INTERNATIONAL SEARCH REPORT

| International application No. |
|---|
| **PCT/CN2021/124486** |

### A. CLASSIFICATION OF SUBJECT MATTER

C08F 6/22(2006.01)i; C08F 14/00(2006.01)i; C08F 14/08(2006.01)i; C08F 14/18(2006.01)i; C08F 214/22(2006.01)i; C08F 214/26(2006.01)i; C08F 214/18(2006.01)i; C08F 214/28(2006.01)i; C08J 3/03(2006.01)i

According to International Patent Classification (IPC) or to both national classification and IPC

### B. FIELDS SEARCHED

Minimum documentation searched (classification system followed by classification symbols)

C08F, C08J

Documentation searched other than minimum documentation to the extent that such documents are included in the fields searched

Electronic data base consulted during the international search (name of data base and, where practicable, search terms used)

CNTXT, ENTXT, VEN, CNABS, CNKI, SIPOABS, DWPI, WEB OF SCIENCE: 胶粒, 甲基纤维素, 增溶剂, 破乳, 聚乙二醇, PEG, 乳液, 聚氧乙烯脂肪酸酯, 氟橡胶, 凝聚, 沉淀, 聚乙二醇单甲醚, 聚山梨酯, 聚山梨酸酯, fluororubber, fluoroelastomer, fluorine rubber, latex , emulsion , solubilizer, solubilizing agent, agglomeration , coagulation , concreting, precipitation , deposition , sedimentation, PEG , polyethylene glycol, polyethleneglycol, polyglycol, methyl cellulose, methylcellulose, cellumeth, cellogran, polyoxyethylene, fatty ester, fatty acid ester, polysorbate

### C. DOCUMENTS CONSIDERED TO BE RELEVANT

| Category* | Citation of document, with indication, where appropriate, of the relevant passages | Relevant to claim No. |
|---|---|---|
| X | CN 110078857 A (ZHEJIANG JUSHENG FLUOROCHEMICAL CO., LTD.; FLUORINE POLYMERIZATION FACTORY ZHEJIANG JUHUA CO., LTD.) 02 August 2019 (2019-08-02)<br>description, paragraphs 0002-0012, embodiment 1 | 7-10 |
| A | CN 102159597 A (DUPONT PERFORMANCE ELASTOMERS) 17 August 2011 (2011-08-17)<br>entire document | 1-10 |
| A | CN 104356276 A (ZHEJIANG FLUORINE CHEMICAL NEW MAT CO., LTD.) 18 February 2015 (2015-02-18)<br>entire document | 1-10 |
| A | CN 112279943 A (ZHONGHAO CHENGUANG RESEARCH INSTITUTE OF CHEMICAL INDUSTRY) 29 January 2021 (2021-01-29)<br>entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 March 2022** | **22 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/124486** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 101605823 A (DUPONT PERFORMANCE ELASTOMERS) 16 December 2009 (2009-12-16)<br>        entire document | 1-10 |
| A | WO 2012067937 A2 (3M INNOVATIVE PROPERTIES CO. et al.) 24 May 2012 (2012-05-24)<br>        entire document | 1-10 |

Form PCT/ISA/210 (second sheet) (January 2015)

INTERNATIONAL SEARCH REPORT
Information on patent family members

International application No.

**PCT/CN2021/124486**

| Patent document cited in search report | | | Publication date (day/month/year) | Patent family member(s) | | | Publication date (day/month/year) |
|---|---|---|---|---|---|---|---|
| CN | 110078857 | A | 02 August 2019 | None | | | |
| CN | 102159597 | A | 17 August 2011 | US | 2010069591 | A1 | 18 March 2010 |
| | | | | US | 7816468 | B2 | 19 October 2010 |
| | | | | AT | 543836 | T | 15 February 2012 |
| | | | | EP | 2331586 | A1 | 15 June 2011 |
| | | | | EP | 2331586 | B1 | 01 February 2012 |
| | | | | WO | 2010033269 | A1 | 25 March 2010 |
| | | | | JP | 2012503069 | A | 02 February 2012 |
| | | | | JP | 5281164 | B2 | 04 September 2013 |
| | | | | CN | 102159597 | B | 12 March 2014 |
| CN | 104356276 | A | 18 February 2015 | None | | | |
| CN | 112279943 | A | 29 January 2021 | None | | | |
| CN | 101605823 | A | 16 December 2009 | WO | 2008097639 | A1 | 14 August 2008 |
| | | | | JP | 2010522250 | A | 01 July 2010 |
| | | | | CN | 101605823 | B | 05 October 2011 |
| | | | | EP | 2109630 | A1 | 21 October 2009 |
| | | | | US | 2008194769 | A1 | 14 August 2008 |
| WO | 2012067937 | A2 | 24 May 2012 | WO | 2012067937 | A3 | 12 July 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101323657 A
- CN 102875711 A